# EUROPEAN PATENT SPECIFICATION

(11) **EP 1 233 612 B1**
(45) Date of publication and mention of the grant of the patent: **01.02.2012**
(21) Application number: 01127760.5
(22) Date of filing: 21.11.2001
(51) Int. Cl.: H04N 5/355, H04N 5/3745

(54) **CMOS image sensor with extended dynamic range**
CMOS Bildsensor mit erweitertem Dynamikbereich
Capteur d'image CMOS à plage dynamique étendue

(30) Priority: 16.02.2001 US 788044
(43) Date of publication of application: 21.08.2002
(73) Proprietor: Aptina Imaging Corporation, Grand Cayman Y1-1205 (KY)
(72) Inventor: Limura, Russel M., Sunnyvale, CA 94087 (US); Farell, Joyce E., Menlo Park, CA 94025 (US)
(74) Representative: Liesegang, Eva

(56) References cited:
- EP-A- 1 003 330

## Description

### CROSS-REFERENCE TO RELATED APPLICATION(S)

The present application contains subject matter related to a copending U.S. Patent Application by Fred A. Perner and Charles Tan titled "CMOS ACTIVE PIXEL SENSOR HAVING IN-PIXEL LOCAL EXPOSURE CONTROL", which was filed November 18, 1998, is identified by Serial No. 09/195,588, and is hereby incorporated herein by reference in its entirety.

### TECHNICAL FIELD

The present invention relates generally to imaging sensors and more particularly to an imaging sensor utilizing CMOS active pixels.

### BACKGROUND ART

EP 1,003,330 A1 discloses an imaging system using variable exposure periods that have durations based upon detecting a fixed voltage drop in order to determine the scene segment radiance. The rate of voltage drop corresponds to the degree of scene segment radiance, such that high radiant scene segments yield faster voltage drops than lower radiant scene segments. To determine the radiance, in a non-complex embodiment, digital linear counts are provided. Alternatively, a non-linear clock period can be provided to change the relationship of exposure period and the degree of radiance from a scene of interest.

Active Pixel Sensors (APSs) are utilized in various imaging devices, such as telescopes, digital cameras, and video recorders. An APS captures an image of a scene of interest by converting incident light from the scene into electrical signals in an analog form. A typical APS has an array of "pixels" or discrete regions on a semiconductor device with each pixel containing a light sensitive element. Each light sensitive element in a pixel generates a separate electrical current, which is proportional to the intensity of the incident light on that element. Over the exposure time of the pixel, the current is integrated into a voltage. The analog voltage is converted into a digital value by an analog to digital converter (ADC). The digital image data can be stored in memory. The digital image data from all the pixels can then be displayed as a composite image on a monitor, printed onto a sheet of paper, or analyzed for information concerning the properties of objects in the scene.

The pixels that are used in conventional APSs can be classified into two types of pixels. The first type of pixel is commonly referred to as an "analog pixel". An analog pixel includes a photosensor, such as a photodiode or a phototransistor, and may include an amplifier. An associated ADC and memory are located external to the pixel. Therefore, any current generated by the photosensor is transmitted from the pixel to the external ADC as an analog signal.

The second type of pixel is known as a "digital pixel". A digital pixel includes not only a photosensor and an amplifier, but also an ADC. In other words, the ADC is contained within the pixel, along with the photosensor and the amplifier. Thus, the magnitude of current generated by the photosensor is digitized within the pixel and can be transferred to off-pixel components as a digital signal.

The prior art APS's, regardless of the pixel type, operated to image a scene of interest by quantifying the degrees of radiance from various scene segments. For each scene segment, a particular pixel quantifies the degree of radiance from the scene segment by measuring a photovoltage driven by a photosensor generated current. When a photosensor is exposed to incident light from a segment of the scene for a fixed integration or exposure time period, the magnitude of a photovoltage will be dependent upon the intensity of the radiance from the scene that is being imaged by the photosensor.

Essentially, at the end of a fixed exposure period, the imaging sensor quantifies the magnitude of the photovoltage using an ADC. When the degree of radiance from the scene is at a detectable maximum level, the output voltage equals a saturation voltage, V_{SAT}. At the mean illumination level, a mean voltage, V_{MEAN}, is output. Lastly, at the detectable minimum level, the voltage is a reset voltage, V_{RESET}. The imaging sensor configured to the limits defined by V_{SAT} and V_{RESET} will be able to differentiate discreet degrees of scene radiance that result in a photovoltage between V_{SAT} and V_{RESET}. However, the amount of differentiable degrees of scene radiance that can be detected by an imaging sensor is at least partially dependent on the resolution of the ADC. As another factor that affects image quality, the radiance sensitivity may be adjusted by shortening or extending the length of the fixed exposure period. But the adjustment is a tradeoff of increasing sensitivity of either high radiant scene segments or low radiant scene segments.

Although the prior art APSs operate well for their intended purpose, what is needed is an imaging sensor having a fast capture of a scene, the ability to capture a scene without blurs, and to have a wide dynamic range over which images can be captured, i.e., the lightest to the darkest parts of a scene which can be captured. These needs have been long pending in the art, and those skilled in the art have been long unsuccessful in filling these needs.

### DISCLOSURE OF THE INVENTION

The present invention provides an Active Pixel Sensor system according to claim 1 and a method for Active Pixel sensing according to claim 6.

The present invention provides an Active Pixel Sensor system having photosensing circuitry for providing a photosignal related to an intensity of incident light on a pixel during an exposure period and converting circuitry operatively connected to said photosensing circuitry to provide an intensity-time signal in a first duration or second duration during the exposure period in response to incident light of a respective first or second range of intensities and to respond to the intensity-time signal to provide a first digital count or a sum of first and second digital counts related to the intensity of the incident light of the respective first or second range of intensities. The system has the following improvements over the previous "digital pixel" scheme: a faster capture of a scene, resulting in the ability to capture the scene without blurs, and the scheme improves the dynamic range over which images can be captured, i.e., the lightest to the darkest parts of a scene which can be captured.

The present invention further provides a method for active pixel sensing by providing a photosignal related to an intensity of incident light on a pixel during an exposure period and providing an intensity-time signal in a first duration or second duration during the exposure period in response to incident light of a respective first or second range of intensities. By responding to the intensity-time signal to provide a first digital count or a sum of first and second digital counts related to the intensity of the incident light of the respective first or second range of intensities the method permits a fast capture of a scene, the ability to capture the scene without blurs, and a wide dynamic range over which images can be captured, i.e., the lightest to the darkest parts of a scene which can be captured.

The above and additional advantages of the present invention will become apparent to those skilled in the art from a reading of the following detailed description when taken in conjunction with the accompanying drawings.

### BRIEF DESCRIPTION OF THE DRAWINGS

FIG. 1 is a circuit schematic of the digital pixel design of the present invention; and
FIG. 2 is a time-voltage chart of the light intensity determination process of the present invention.

### BEST MODE FOR CARRYING OUT THE INVENTION

### Organization:

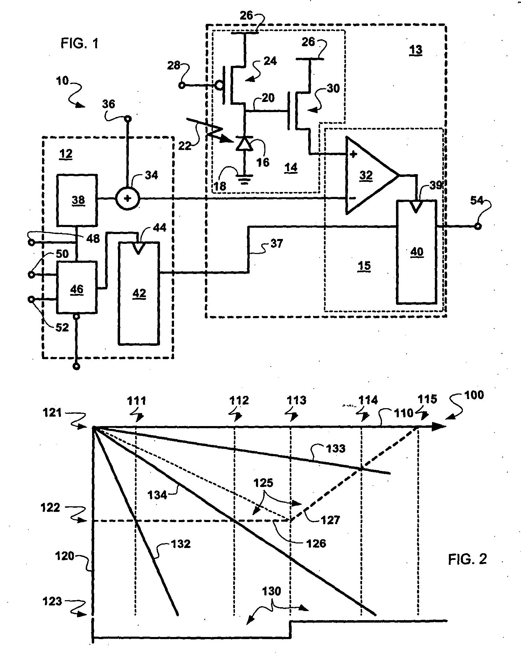

Referring now to FIG. 1, therein is shown an Active Pixel Sensor (APS) system 10 including system circuitry 12 and pixel circuitry 13. There is one system circuitry 12 for a plurality of pixel circuitry 13.

The pixel circuitry 13 includes photosensing circuitry 14 and analog to digital converter (ADC) circuitry 15. The photosensing circuitry 14 includes a photosensor, or photodiode 16, which is connected at one end to a ground 18 and to a floating diffusion node 20 at the other. The photodiode 16 is responsive to incident light 22 to change the voltage V_{FD} at the floating diffusion node 20.

The floating diffusion node 20 is connected by a reset transistor 24 which has its source connected to a supply voltage Vdd 26 and its gate connected to a reset input 28.

The floating diffusion node 20 is also connected to the gate of transistor 30, which is configured as a source-follower amplifier.

The source-follower transistor 30 is connected to the supply voltage Vdd 26 and to provide an intensity signal to one input of an analog comparator 32 in the ADC circuitry 15.

The other input of the analog comparator 32 is connected to receive a reference-time signal from an adder 34 in the system circuitry 12. The adder 34 is connected to receive a first reference-time signal from a reference voltage V_{REF} input 36 during a first time duration and subsequently to add a second reference-time signal from a ramp generator 38 during a second time duration. The first reference-time signal is a constant voltage of V_{REF,INIT} and the second reference-time signal is a "ramped" increasing voltage of V_{RAMP.}

The analog comparator 32 output is connected to the clock input 39 of a digital storage register 40. The comparator 32 outputs a transition signal on 39 when the difference of its inputs become 0.The input of the digital intensity storage register 40 is connected to a counter 42 in the system circuitry 12. The counter 42 has its clock input 44 connected to a multiplexer (MUX) 46.

The MUX 46 has a multiplexer control input 48 which controls which input, a clock input 50 or 52, is connected to its output 44. A slow (or normal) clock input is provided to clock input 50 and a fast clock input is provided to clock input 52. The control input 48 initially is zero to select the normal clock input for the multiplexer. The control signal 48 is also connected to the ramp generator 38. A 0-to-1 transition at the start input 48 simultaneously switches the MUX 46 and starts the ramp generator 38.

The digital intensity storage register 40 provides the digital pixel value output at a digital pixel output 54.

Since the APS 10 is best understood by reference to a time-voltage chart, the time-voltage chart will be described first before describing the system of operation of the APS 10.

Referring now to FIG. 2, therein is shown a time-voltage chart 100 having a time axis 110 with a series of different time points, T₁ 111 through T₄ 114, representative of different times during the duration of the exposure and a voltage axis 120 showing a reset voltage (V_{RESET}) 121, an initial reference voltage (V_{REF,INIT}) 122, and a saturation voltage (V_{SAT}) 123. As would be evident to those skilled in the art, a long exposure period will allow extremely low intensities of incident light 22 to be sensed but would take infinite time. In the prior art, in order to capture images quickly, the lower intensities were not sensed.

In the time-voltage chart 100, the initial reference voltage 122 is designated by a reference voltage line 125 which has a constant and a ramped portion 126 and 127. The point at which the constant portion 126 becomes the ramped portion 127 is designated as the _{T3} 113 time, which is set by a start signal 130 which increases value at time T₃ 113. The start signal 130 is the voltage-time waveform for the start signal 48 of Figure 1.

The time-voltage chart 100 further contains three exemplary radiance level lines. A maximum radiance level line 132 represents the brightest intensity incident light 22 falling on the photodiode 16. The minimum radiance level line 133 represents a very low intensity incident light 22 falling on the photodiode 16. A mean radiance level line 134 represents a mean intensity incident light 22 falling on the photodiode 16.

The time T₁ 111 is defined as the intersection of the maximum-radiance level line 132 with the reference voltage line 125. The time T₄ 114 is defined by the intersection of the minimum radiance level line 133 with the reference voltage line 125. And, the time T₂ 112 is defined by the intersection of the mean radiance level line 134 with the reference voltage line 125. The entire exposure duration for the pixel is from time T₁ 111 to time T₅ 115.

### Operation:

At the start of the sensing of a pixel, a reset signal is provided at the reset input 28 which turns on the reset transistor 24. With the reset transistor 24 on, the supply voltage input 26 is imposed on the floating diffusion node 20. This provides an initial value to the first input of the analog comparator 32. At this time, the second input of the analog comparator 32 is receiving V_{REF,INIT} applied at the initial reference voltage input 36. The output of the comparator is initially 0. The control input 48 of the MUX 46 is initially set to provide the slow clock input 50 to the clock input 44 of the counter 42. This provides a slow count to the digital intensity storage register 40.

With maximum radiance level incident light 22, the photodiode 16 will let the voltage at the floating diffusion node 20 discharge quickly as shown by the high angle of the maximum radiance level line 132 in FIG. 2.

With mean radiance level incident light 22, the photodiode 16 will let the voltage at the floating diffusion node 20 discharge as shown by the mean radiance level line 134 in FIG. 2. This discharges the photodiode 16 less quickly than the maximum radiance line 132.

As the floating diffusion node 20 discharges, the source-follower transistor 30 will provide a decreasing voltage to the analog comparator 32. When the voltage from the source-follower transistor 30 drops below V_{REF,INIT} at the initial reference voltage input 36, the analog comparator 32 will clock in the value on the signal line 37 into the digital intensity storage register 40 at time T₂ 112 and a count will be registered at the digital pixel output 54 which is proportional to the mean radiance level of the incident light 22.

As evident from the above, if the radiance of a scene is less than the mean level, longer exposure periods are required before the digital intensity storage register will be stopped. To be able to capture very low radiance light levels, this design will require very long exposure periods where there is a long capture time and subsequent blurring of the image sensed by a large number of pixels. Conversely, it is also evident that limiting the sensing time to shorter exposure periods will reduce the ability to detect incident light at lower radiance levels.

In the present invention for minimum radiance level incident light 22, the APS 10 initially operates in the manner described for maximum and mean radiance level incident light. After a predetermined period of time, which is determined heuristically, and which is designated as the time T₃ 113, the start voltage 130 is increased so as to start the ramp generator 38 and switch the MUX 46 from the slow clock input 50 to the fast clock input 52.

Thus, with minimum radiance level incident light 22, the photodiode 16 will let the voltage at the floating diffusion node 20 discharge very slowly (compared to the mean radiance line 134) as shown by the minimum radiance level line 133 in FIG. 2.

For the minimum radiance level incident light 22, as the floating diffusion node 20 discharges, the source-follower transistor 30 will provide a very slowly decreasing voltage to the analog comparator 32 which will not drop below V_{REF,INIT} before the exposure time T3. At the heuristically determined time T₃ 113, the start voltage 130 (start signal 48) will increase to cause the ramp generator 38 to provide an increasing "ramp" voltage which will be added to the initial reference voltage input 36 by the adder 34 to increase the voltage at the second input of the analog comparator 32. At T3 the control input of multiplexer 46 selects the fast clock 52. The fast clock input 52 through the MUX 46 will cause the counter 42 to provide a faster count, or a larger number of counts per given time interval, to the digital intensity storage register 40.

As would be evident to those skilled in the art, the duration of the exposure is divided into at least two-portions and the "ramp" (or multiple ramps if desired) can be any linear or non-linear increase corresponding to the counts from the counter 42 which optimizes the low intensity light resolution.

When the voltage from the source-follower transistor 30 drops below the reference voltage of the reference voltage line 125 in the ramped portion 127, the analog comparator 32 will clock in the value on the signal line 37 into the digital intensity storage register 40 at time T₄ 114 at a count which is proportional to the minimum radiance level of the incident light 22.

Thus, with the addition of the system circuitry 12, the APS 10 will provide a faster capture time for very low levels of radiance. The faster clock selected after time T3 provides greater resolution and increased dynamic range for the low level light levels.

While the invention has been described in conjunction with a specific best mode, it is to be understood that many alternatives, modifications, and variations will be apparent to those skilled in the art in light of the aforegoing description. Accordingly, it is intended to embrace all such alternatives, modifications, and variations which fall within the scope of the included claims. All matters hither-to-fore set forth herein or shown in the accompanying drawings are to be interpreted in an illustrative and non-limiting sense.

## Claims

1. An active pixel sensor system [10] comprising
photosensing circuitry [14] for providing a photosignal related to an intensity of incident light on a pixel during an exposure period;
reset means (24) for resetting the photosensing circuitry (14) to a predetermined reset voltage (V_{RESET}) at the beginning of the exposure period **characterized by**,
converting circuitry [13] operatively connected to said photosensing circuitry [14] for providing
a first constant reference voltage in a first time interval during the exposure period in response to incident light of a first range of intensities, and a second reference voltage in a second time interval during the exposure period in response to incident light of a second range of intensities the second time interval following the first time interval, wherein the second reference voltage is obtained by adding the first reference voltage with a ramp signal and is ramping towards said reset voltage; and,
in response to the first and second reference voltages, for providing a first digital count related to the intensity of the incident light of the first range of intensities, or
a sum of first digital count related to the minimum intensity of the incident light in the first range of intensities and second digital count related to the intensity of the incident light of the second range of intensities.

2. The active pixel sensor system [10] as claimed in claim 1 including system circuitry [12] operatively connected to the converting circuitry [13] to provide faster digital counts during the second time interval than during the first time interval.

3. The active pixel sensor system [10] as claimed in claim 1 or 2 wherein the converting circuitry [13] includes comparing circuitry [15] for comparing the photosignal to the first reference time signal during the first duration and to the second reference-time signal during the second duration to provide the intensity-time signal.

4. The active pixel sensor system [10] as claimed in one of the preceding claims wherein the photosensing circuitry [14] has:
a photosensor [16] for providing the photosignal proportional to the intensity of light incident on the pixel;
and including system circuitry [12] having:
reference signal circuitry [34, 36, 38] for providing a constant signal during the first duration and adding a ramped signal during the second duration to provide the first and second intensity-time signals;
and wherein the converting circuitry [13] has:
register circuitry [40] for registering the number of counts until the intensity-time signal is provided.

5. The active pixel sensor system [10] as claimed in one of the preceding claims including system circuitry [12] for a plurality of photosensing circuitry [14].

6. A method for active pixel sensing [10] comprising the steps of
providing a photosignal related to an intensity of incident light on a pixel during an exposure period by a photosensing circuity (14);
resetting the photosensing circuitry (14) to a predetermined reset voltage (V_{RESET}) at the beginning of the exposure period **characterized by**;
providing a first constant reference voltage in a first time interval during the exposure period in response to incident light of a first range of intensities, and a second reference voltage in a second time interval during the exposure period in response to incident light of a second range of intensities the second time interval following the first time interval, wherein the second reference voltage is obtained by adding the first reference voltage with a ramp signal and is ramping towards said reset voltage (V_{RESET}); and
in response to the first and second reference voltages providing a first digital count related to the intensity of the incident light of the first range of intensities if the incident light is of the first range of intensities, and a sum of first digital count related to the minimum intensity of the incident light in the first range of intensities and second digital count being related to the intensity of the incident light of the second range of intensities, if the incident light is of the second range of intensities.

7. The method for active pixel sensing as claimed in claim 6 including providing faster digital counts during the second time interval than during the first time interval [12].

8. The method for active pixel sensing as claimed in claim 6 or 7 wherein:
providing the photosignal provides a photosignal proportional to the intensity of light incident on the pixel [16];
and including:
providing a constant signal during the first duration and adding a ramped signal during the second duration to provide the first and second intensity-time signals [34, 36, 38]; and wherein:
responding to the intensity-time signal includes registering the number of counts until the intensity-time signal is provided [40].

9. The method for active pixel sensing as claimed in one of claims 6 to 8 including providing a plurality of photosignals [14].

## Patentansprüche

1. Aktives Pixelsensorsystem (10) ("active pixel sensor system"), das Folgendes umfasst:
eine Fotosensorschaltung (14), um ein Fotosignal bereitzustellen, welches mit einer Intensität von während einer Belichtungsperiode auf einen Pixel einfallendem Licht zusammenhängt;
Reset-Mittel (24) zum Zurücksetzen der Fotosensorschaltung (14) auf eine vorbestimmte Reset-Spannung (V_{RESET}) am Anfang der Belichtungsperiode, **gekennzeichnet durch** eine Konverterschaltung (13), die operativ mit der Fotosensorschaltung (14) verbunden ist, um Folgendes bereitzustellen:
eine erste konstante Referenzspannung in einem ersten Zeitintervall während der Belichtungsperiode in Antwort auf einfallendes Licht aus einem ersten Intensitätsbereich, oder eine zweite Referenzspannung in einem zweiten Zeitintervall während der Belichtungsperiode in Antwort auf einfallendes Licht aus einem zweiten Intensitätsbereich, wobei das zweite Zeitintervall auf das erste Zeitintervall folgt,
wobei die zweite Referenzspannung erhalten wird, indem die erste Referenzspannung und ein Rampensignal addiert werden, und auf die Reset-Spannung zuläuft; und
um, in Antwort auf die erste und die zweite Referenzspannung, Folgendes bereitzustellen:
einen ersten digitalen Zählstand ("count"), der mit der Intensität des einfallenden Lichtes aus dem ersten Intensitätsbereich zusammenhängt, oder
eine Summe aus einem ersten digitalen Zählstand, der mit der minimalen Intensität des einfallenden Lichtes aus dem ersten Intensitätsbereich zusammenhängt, und einem zweiten digitalen Zählstand, der mit der Intensität des einfallenden Lichts aus dem zweiten Intensitätsbereich zusammenhängt.

2. Aktives Pixelsensorsystem (10) nach Anspruch 1, das eine Schaltung (12) enthält, welche operativ mit der Konverterschaltung (13) verbunden ist, um während des zweiten Zeitintervalls schnellere digitale Zählungen bereitzustellen als während des ersten Zeitintervalls.

3. Aktives Pixelsensorsystem (10) nach Anspruch 1 oder 2, bei dem die Konverterschaltung (13) eine Vergleicherschaltung (15) enthält, die zum Vergleichen des Fotosignals mit dem ersten Referenz-Zeitsignal während der ersten Zeitdauer und mit dem zweiten Referenz-Zeitsignal während der zweiten Zeitdauer bestimmt ist, um das Intensitäts-Zeitsignal bereitzustellen.

4. Aktives Pixelsensorsystem (10) nach einem der vorangehenden Ansprüche, bei dem die Fotosensorschaltung (14) Folgendes umfasst:
einen Fotosensor (16) zum Bereitstellen des Fotosignals, welches proportional zu der Intensität des auf den Pixel einfallenden Lichtes ist;
und das eine Systemschaltung (12) umfasst, die Folgendes enthält:
eine Referenzsignalschaltung (34, 36, 38) zum Bereitstellen eines konstanten Signals während der ersten Zeitdauer und zum Addieren eines Rampensignals während der zweiten Zeitdauer, um das erste und das zweite Intensitäts-Zeitsignal bereitzustellen; und wobei die Konverterschaltung (13) Folgendes umfasst:
eine Registrierschaltung (40) zum Registrieren der Anzahl von Zählungen, bis das Intensitäts-Zeitsignal bereitgestellt wird.

5. Aktives Pixelsensorsystem (10) nach einem der vorangehenden Ansprüche, das eine Systemschaltung (12) für eine Mehrzahl von Fotosensor-Schaltungen (14) enthält.

6. Verfahren für eine aktive Pixelsensorik (10), das die folgenden Schritte umfasst:
Bereitstellen eines Fotosignals, welches mit der Intensität von Licht zusammenhängt, welches während einer Belichtungsperiode auf ein Pixel einfällt, mit Hilfe einer Fotosensorschaltung (14);
Zurücksetzen der Fotosensorschaltung (14) auf eine vorbestimmte Reset-Spannung (V_{RESET}) am Anhang der Belichtungsperiode, **gekennzeichnet durch** die folgenden Schritte:
Bereitstellen einer ersten konstanten Referenzspannung in einem ersten Zeitintervall während der Belichtungsperiode in Antwort auf den Einfall von Licht aus einem ersten Intensitätsbereich und einer zweiten Referenzspannung in einem zweiten Zeitintervall während der Belichtungsperiode in Antwort auf das Einfallen von Licht aus einem zweiten Intensitätsbereich, wobei das zweite Zeitintervall dem ersten Zeitintervall folgt, wobei die zweite Referenzspannung erhalten wird, indem die erste Referenzspannung und ein Rampensignal addiert werden, und sie auf die Reset-Spannung (V_{RESET}) zuläuft; und
Bereitstellen, in Antwort auf die erste und die zweite Referenzspannung, eines ersten digitalen Zählstandes, der mit der Intensität des einfallenden Lichtes aus dem ersten Intensitätsbereich zusammenhängt, wenn das einfallende Licht in dem ersten Intensitätsbereich liegt, und einer Summe aus einem ersten digitalen Zählstand, der mit der minimalen Intensität des einfallenden Lichtes in dem ersten Intensitätsbereich zusammenhängt, und einem zweiten digitalen Zählstand, der mit der Intensität des einfallenden Lichtes des zweiten Intensitätsbereiches zusammenhängt, wenn das einfallende Licht im zweiten Intensitätsbereich liegt.

7. Verfahren für eine aktive Pixelsensorik nach Anspruch 6, umfassend das Bereitstellen von schnelleren Zählungen während des zweiten Zeitintervalls als während des ersten Zeitintervalls (12).

8. Verfahren für eine aktive Pixelsensorik nach Anspruch 6 oder 7, bei dem die Bereitstellung des Fotosignals ein Fotosignal bereitstellt, welches proportional zu der Intensität des auf den Pixel (16) einfallenden Lichtes ist; und das Folgendes umfasst:
Bereitstellen eines konstanten Signals während der ersten Zeitdauer und das Addieren eines Rampensignals während der zweiten Zeitdauer, um das erste und das zweite Intensitäts-Zeitsignal (34, 36, 38) bereitzustellen, und wobei die Antwort auf das Intensitäts-Zeitsignal das Registrieren der Anzahl von Zählungen umfasst, bis das Intensitäts-Zeitsignal bereitgestellt wird (40).

9. Verfahren für eine aktive Pixelsensorik nach einem der Ansprüche 6 bis 8, welches die Bereitstellung einer Mehrzahl von Fotosignalen (14) umfasst.

## Revendications

1. Système de capteur à pixels actifs [10] comprenant :
un circuit de photodétection [14] pour fournir un signal photoélectrique associé à l'intensité d'une lumière incidente sur un pixel pendant une période d'exposition ;
des moyens de réinitialisation (24) pour réinitialiser le circuit de photodétection (14) à une tension de réinitialisation (V_{RESET}) prédéterminée au début de la période d'exposition, **caractérisé par**
un circuit de conversion [13] connecté fonctionnellement au circuit de photodétection [14] pour fournir
une première tension de référence constante dans un premier intervalle de temps pendant la période d'exposition en réponse à de la lumière incidente d'une première plage d'intensité, et une deuxième tension de référence dans un deuxième intervalle de temps pendant la période d'exposition en réponse à de la lumière incidente d'une deuxième plage d'intensité, le deuxième intervalle de temps suivant le premier intervalle de temps, la deuxième tension de référence étant obtenue en ajoutant la première tension de référence à un signal de rampe et montant en rampe vers la tension de réinitialisation ; et
en réponse aux première et deuxième tensions de référence, pour fournir un premier compte numérique associé à l'intensité de la lumière incidente de la première plage d'intensité, ou
une somme d'un premier compte numérique associé à l'intensité minimum de la lumière incidente dans la première plage d'intensité et d'un deuxième compte numérique associé à l'intensité de la lumière incidente de la deuxième plage d'intensité.

2. Système de capteur à pixels actifs [10] selon la revendication 1, comprenant un circuit système [12] connecté fonctionnellement au circuit de conversion [13] pour fournir des comptes numériques plus rapides pendant le deuxième intervalle de temps que pendant le premier intervalle de temps.

3. Système de capteur à pixels actifs [10] selon la revendication 1 ou 2, dans lequel le circuit de conversion [13] comprend un circuit de comparaison [15] pour comparer le signal photoélectrique au premier signal temporel de référence pendant la première durée et au deuxième signal temporel de référence pendant la deuxième durée pour obtenir le signal temporel d'intensité.

4. Système de capteur à pixels actifs [10] selon l'une quelconque des revendications précédentes, dans lequel le circuit de photodétection [14] comporté :
un photodétecteur [16] pour fournir le signal photoélectrique proportionnel à l'intensité de la lumière incidente sur le pixel ;
et comprenant un circuit système [12] comportant :
un circuit de signal de référence [34, 36, 38] pour fournir un signal constant pendant la première durée et ajouter un signal de rampe pendant la deuxième durée pour fournir les premier et deuxième signaux temporels d'intensité ;
et dans lequel le circuit de conversion [13] comporté :
un circuit de registre [40] pour enregistrer le nombre compté jusqu'à ce que le signal temporel d'intensité soit fourni.

5. Système de capteur à pixels actifs [10] selon l'une quelconque des revendications précédentes, comprenant un circuit système [12] pour une pluralité de circuits de photodétection [14].

6. Procédé de détection à pixels actifs [10] comprenant les étapes suivantes :
fournir, par un circuit de photodétection (14), un signal photoélectrique associé à l'intensité d'une lumière incidente sur un pixel pendant une période d'exposition ;
réinitialiser le circuit de photodétection (14) à une tension de réinitialisation prédéterminée (V_{RESET}) au début de la période d'exposition ; **caractérisé par** l'étape suivante
fournir une première tension de référence constante dans un premier intervalle de temps pendant la période d'exposition en réponse à de la lumière incidente d'une première plage d'intensité, et une deuxième tension de référence dans un deuxième intervalle de temps pendant la période d'exposition en réponse à de la lumière incidente d'une deuxième plage d'intensité, le deuxième intervalle de temps suivant le premier intervalle de temps, la deuxième tension de référence étant obtenue en ajoutant la première tension de référence à un signal de rampe et montant en rampe vers la tension de réinitialisation (V_{RESET}) ; et,
en réponse aux première et deuxième tensions de référence, fournir
un premier compte numérique associé à l'intensité de la lumière incidente de la première plage d'intensité si la lumière incidente est de la première plage d'intensité, et une somme d'un premier compte numérique associé à l'intensité minimum de la lumière incidente dans la première plage d'intensité et d'un deuxième compte numérique associé à l'intensité de la lumière incidente de la deuxième plage d'intensité, si la lumière incidente est de la deuxième plage d'intensité.

7. Procédé de détection à pixels actifs selon la revendication 6, comprenant la fourniture de comptes numériques plus rapides pendant le deuxième intervalle de temps que pendant le premier intervalle de temps [12].

8. Procédé de détection à pixels actifs selon la revendication 6 ou 7, dans lequel :
la fourniture du signal photoélectrique fournit un signal photoélectrique proportionnel à l'intensité de la lumière incidente sur le pixel [16] ;
et comprenant les étapes suivantes :
fournir un signal constant pendant la première durée et ajouter un signal de rampe pendant la deuxième durée pour obtenir les premier et deuxième signaux temporels d'intensité [34, 36, 38] ; et dans lequel :
répondre au signal temporel d'intensité comprend l'enregistrement du nombre compté jusqu'à ce que le signal temporel d'intensité soit fourni [40].

9. Procédé de détection de pixels actifs selon l'une quelconque des revendications 6 à 8, comprenant la fourniture d'une pluralité de signaux photoélectriques [14].
